# FASCICULE DE BREVET EUROPEEN

(11) **EP 4 065 427 B1**
(45) Date de publication et mention de la délivrance du brevet: **15.01.2025**
(21) Numéro de dépôt: 20804552.6
(22) Date de dépôt: 13.11.2020
(51) Int. Cl.: B60R 22/48, B64D 11/06

(54) **CEINTURE DE SECURITÉ, NOTAMMENT POUR UN SIÈGE D'AVION**
SICHERHEITSGURT, INSBESONDERE FÜR EINEN FLUGZEUGSITZ
SAFETY BELT, IN PARTICULAR FOR AN AIRCRAFT SEAT

(30) Priorité: 29.11.2019 FR 1913520
(43) Date de publication de la demande: 05.10.2022
(73) Titulaire: Safran Seats, 78370 Plaisir (FR)
(72) Inventeur: OBADIA, Jean-Marc, 77550 Moissy-Cramayel (FR); MARCOVICI-SOULAGE, Lisandre, 77550 Moissy-Cramayel (FR); POUY, Léo, 77550 Moissy-Cramayel (FR)
(74) Mandataire: Marconnet, Sébastien
(86) Numéro de dépôt international: PCT/EP2020/082120
(87) Numéro de publication internationale: WO 2021/104901

(56) Documents cités:
- DE-A1- 102006 030 193
- DE-A1- 102018 002 819
- US-A- 3 351 381
- US-A- 4 659 108
- US-A1- 2013 207 442
- US-B1- 6 454 304

## Description

La présente invention porte sur une ceinture de sécurité, notamment une ceinture de sécurité pour un siège d'avion.

L'invention est adaptable à tous les types de sièges, en particulier les sièges économiques, affaires, et premières classes d'un avion et sur tous types de ceintures avec fixation 2, 3, 4, ou 5 points avec ou sans système d'enrouleur.

La présente invention peut également trouver une application dans le domaine des véhicules de transport (voitures, bus, trains ...) nécessitant une utilisation d'une ceinture de sécurité.

Dans le domaine des avions, les mécanismes connus de fermeture d'une ceinture de sécurité sont standards pour la quasi-totalité des vols commerciaux. Ces mécanismes standards comportent de façon connue en soi une boucle de fermeture formée par un élément mâle et un élément femelle aptes à coopérer entre eux pour assurer la fermeture de la ceinture. Pour les ceintures sans enrouleur, l'élément mâle et/ou l'élément femelle peuvent glisser par rapport à une sangle correspondante pour adapter la ceinture à la morphologie du passager.

La fermeture des ceintures de sécurité est généralement vérifiée par un personnel de bord, notamment lors des phases de stationnement, de roulage, de décollage, d'atterrissage de l'aéronef mais également en cas de turbulence et/ou de situation d'urgence. De telles vérifications visuelles sont toutefois longues à réaliser, et ne permettent pas de s'assurer que le passager détache sa ceinture de sécurité juste après le contrôle effectué par le personnel de bord. En outre, il existe des possibilités d'erreurs liées à de tels contrôles visuels réalisés par un être humain.

Certains dispositifs connus, tels que celui décrit dans le document US6737862, assurent une détection de la fermeture de la ceinture de sécurité. Toutefois, ces dispositifs ne permettent pas de détecter l'ajustement de la ceinture autour du corps du passager.

L'invention vise à remédier efficacement à ces inconvénients en proposant une ceinture de sécurité, en particulier destinée à être installée sur un siège d'avion, comportant:
- une boucle de fermeture comprenant un élément mâle et un élément femelle,
- une première sangle reliée à l'élément mâle et une deuxième sangle reliée à l'élément femelle,
- la première sangle et la deuxième sangle étant aptes à être attachées ensemble au moyen de la boucle de fermeture pouvant passer d'un état ouvert à un état fermé par mise en coopération de l'élément mâle et de l'élément femelle,
- ladite ceinture de sécurité comportant en outre:
- un système de détection d'état de fermeture de la ceinture de sécurité apte à générer une information relative à un état de fermeture de la ceinture de sécurité, et
- un système de détection d'état de tension mécanique de la ceinture de sécurité apte à générer une information relative à un état de tension mécanique d'au moins une sangle de la ceinture de sécurité.

L'invention permet ainsi de réaliser automatiquement le contrôle de la ceinture de sécurité afin de déterminer si la ceinture est bouclée et si la sangle est correctement tendue autour du passager. L'invention permet également de s'assurer que la ceinture de sécurité est bien positionnée sur le passager et n'est pas fermée derrière ou sous le passager installé sur son siège.

Une ceinture de sécurité représentant l'état de la technique le plus proche est divulguée par le document US 2013/207442 A1.

Selon une réalisation, le système de détection d'état de fermeture comporte :
- un élément magnétique disposé sur un des éléments parmi l'élément femelle et l'élément mâle de la boucle de fermeture, et
- un capteur de champ magnétique placé sur l'autre des éléments parmi l'élément femelle et l'élément mâle de la boucle de fermeture.

Selon une réalisation, le capteur de champ magnétique, notamment à effet Hall, est un interrupteur magnétique apte à se fermer du fait de la proximité de l'élément magnétique lorsque la boucle de fermeture est fermée.

Selon une réalisation, le capteur est de type capacitif ou un contacteur électromagnétique sans nécessité d'aimant ou un contacteur électromagnétique nécessitant un aimant, tel qu'un interrupteur à lames souples ("Reed switch" en anglais).

D'après l'invention, le système de détection d'état de tension mécanique comporte un organe élastique et un interrupteur disposés entre une portion d'une boucle de sangle et une portion d'un élément mâle ou un élément femelle, de telle façon que lorsqu'une tension mécanique appliquée sur une sangle dépasse un seuil, la sangle déforme l'organe élastique et enclenche l'interrupteur pour indiquer que la ceinture de sécurité est suffisamment serrée autour d'une portion du corps d'un passager. En variante ou en complément, le système de détection d'état de tension mécanique comporte un capteur piézo-électrique ou une jauge de contrainte réagissant à une pression appliquée par une sangle de la ceinture de sécurité. Le capteur piézo-électrique ou la jauge pourra détecter la déformation de l'organe élastique.

Selon une réalisation, l'organe élastique est constitué par une tige pliante.

Selon une réalisation, l'organe élastique est constitué par au moins un ressort.

Selon une réalisation, l'organe élastique est un ressort à lame.

Selon une réalisation, ladite ceinture de sécurité comporte une unité de contrôle connectée au système de détection d'état de fermeture de la ceinture de sécurité et au système de détection d'un niveau de tension mécanique de la ceinture de sécurité.

Selon une réalisation, ladite unité de contrôle est apte à commander un module de communication, notamment sans-fil, pour transmettre l'information relative à l'état de fermeture de la ceinture de sécurité et/ou l'information relative à l'état de tension mécanique de la ceinture de sécurité.

Selon une réalisation, l'unité de contrôle est configurée pour mettre sous tension le module de communication après une détection d'un changement d'état de la ceinture de sécurité et pour couper une alimentation du module de communication après que ledit module de communication a transmis le changement d'état de la ceinture de sécurité.

Selon une réalisation, l'unité de contrôle est configurée pour détecter un changement d'état de tension mécanique uniquement si l'interrupteur change d'état pendant une durée supérieure à un seuil et si la boucle de fermeture est à l'état fermé.

Selon une réalisation, l'unité de contrôle est configurée pour passer dans un mode veille après une période d'inactivité prédéterminée.

Selon une réalisation, ladite ceinture de sécurité comporte une source d'énergie électrique, notamment une pile, pour être autonome électriquement.

Selon une réalisation, un condensateur est connecté électriquement en parallèle de la source d'énergie électrique de façon à provoquer une consommation de courant de la source d'énergie électrique pour éviter sa passivation liée à une longue période d'inactivité de la source d'énergie électrique.

Selon une réalisation, l'unité de contrôle intègre un compteur d'un nombre d'activations du module de communication pour évaluer un niveau d'énergie électrique restant de la source d'énergie électrique.

Selon une réalisation, la ceinture de sécurité comporte une butée disposée sur une partie d'une sangle réglable de façon à empêcher un serrage de la ceinture de sécurité lorsque personne n'est installé sur le siège correspondant.

Selon une réalisation, une sangle fixe a une longueur suffisante ne permettant pas d'effectuer un serrage de la ceinture de sécurité lorsque personne n'est installé sur le siège correspondant.

Selon une réalisation, le capteur magnétique du système de détection d'état de fermeture de la ceinture de sécurité, et le système de détection d'état de tension mécanique de la ceinture de sécurité sont disposés sur un même élément mâle ou femelle de la ceinture de sécurité.

L'invention a également pour objet un siège comportant une ceinture de sécurité telle que précédemment définie.

L'invention concerne en outre un avion comportant un siège tel que précédemment défini.

La présente invention sera mieux comprise et d'autres caractéristiques et avantages apparaîtront encore à la lecture de la description détaillée qui suit comprenant des modes de réalisation donnés à titre illustratif en référence avec les figures annexées, présentés à titre d'exemples non limitatifs, qui pourront servir à compléter la compréhension de la présente invention et l'exposé de sa réalisation et, le cas échéant, contribuer à sa définition, sur lesquelles:
[Fig. 1] La figure 1 est une représentation schématique d'une ceinture de sécurité selon la présente invention;
[Fig. 2] La figure 2 est une représentation schématique de face d'un élément mâle d'une boucle de fermeture intégrant un système de détection d'état de tension mécanique de la ceinture de sécurité;
[Fig. 3] La figure 3 est une représentation schématique de côté de l'élément mâle de la figure 2;
[Fig. 4] [Fig. 5] Les figures 4 et 5 sont des représentations schématiques de variantes de réalisation du système de détection d'état de tension mécanique de la ceinture de sécurité;
[Fig. 6] La figure 6 est un diagramme d'étapes de fonctionnement d'une ceinture de sécurité selon la présente invention;
[Fig. 7] La figure 7 est une représentation schématique d'une ceinture de type trois points intégrée sur un siège, notamment un siège d'avion.

Il est à noter que, sur les figures, les éléments structurels et/ou fonctionnels communs aux différents modes de réalisation peuvent présenter les mêmes références. Ainsi, sauf mention contraire, de tels éléments disposent de propriétés structurelles, dimensionnelles et matérielles identiques.

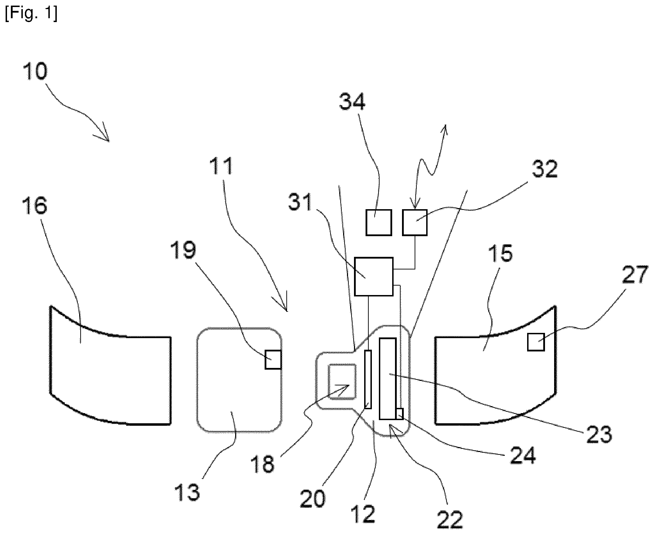

La figure 1 montre une ceinture de sécurité 10, en particulier destinée à être installée sur un siège d'avion, comportant une boucle de fermeture 11 comprenant un élément mâle 12 et un élément femelle 13, ainsi qu'une première sangle 15 reliée à l'élément mâle 12 et une deuxième sangle 16 reliée à l'élément femelle 13.

La première sangle 15 et la deuxième sangle 16 sont réalisées en tissu. La première sangle 15 et la deuxième sangle 16 sont aptes à être attachées ensemble au moyen de la boucle de fermeture 11 pouvant passer d'un état "ouvert" à un état "fermé" par mise en coopération de l'élément mâle 12 et de l'élément femelle 13. L'élément mâle 12 et/ou l'élément femelle 13 peuvent glisser par rapport à une sangle 15, 16 correspondante pour adapter la ceinture à la morphologie du passager.

Un système 18 de détection d'état de fermeture de la ceinture de sécurité 10 est apte à générer une information relative à l'état de fermeture de la ceinture de sécurité 10.

A cet effet, le système 18 de détection d'état de fermeture comporte un élément magnétique 19, tel qu'un aimant, disposé sur l'élément femelle 13 et un capteur de champ magnétique 20 placé sur l'élément mâle 12. En variante, la structure pourra être inversée, c'est-à-dire que l'élément magnétique 19 pourra être disposé sur l'élément femelle 13 et le capteur de champ magnétique 20 pourra être disposé sur l'élément mâle 12. En variante, l'élément magnétique 20 pourra être une bobine parcourue par un courant.

Le capteur de champ magnétique 20 est de préférence un interrupteur magnétique, notamment un interrupteur à lames souples ("Reed switch" en anglais) apte à se fermer du fait de la proximité de l'élément magnétique 19 lorsque la boucle 11 est à l'état fermé. En variante, le capteur de champ magnétique 20 est un capteur à effet Hall. En variante, le capteur est de type capacitif ou un contacteur électromagnétique sans nécessité d'aimant. En variante, il serait possible d'utiliser d'autres moyens de détection de la fermeture de la boucle de ceinture, tels qu'un capteur piézo-électrique ou une jauge de contrainte.

Par ailleurs, un système 22 de détection d'état de tension mécanique de la ceinture de sécurité 10 est apte à générer une information relative à un état de tension mécanique d'au moins une sangle 15, 16 de la ceinture de sécurité 10. Ainsi, une information relative à un état "tendu" de la ceinture 10 est générée par le système 22 lorsque la tension appliquée sur une sangle 15, 16 dépasse un seuil et que la boucle de ceinture 11 est dans un état fermé ou une information relative à un état "détendu" lorsque la tension mécanique appliquée sur une sangle 15, 16 est inférieure au seuil.

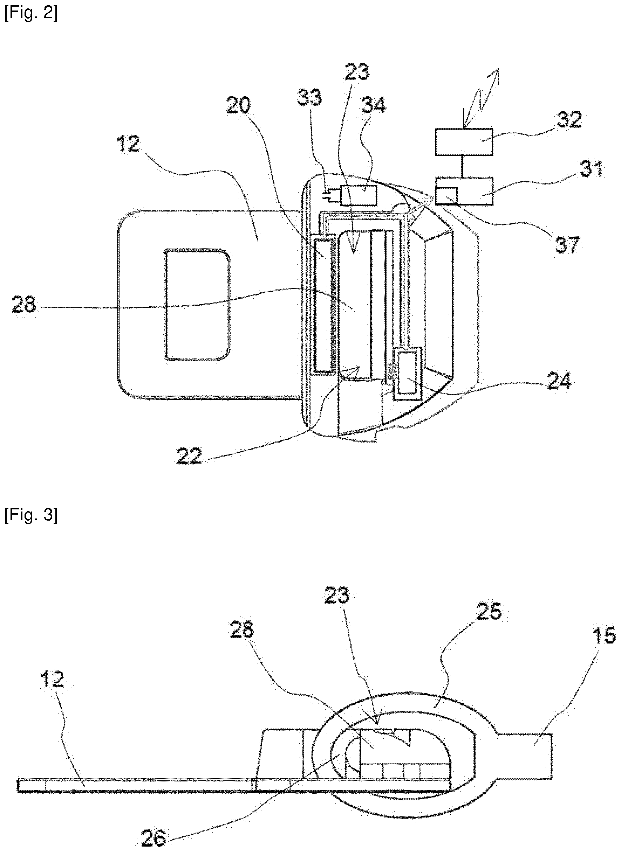

A cet effet, comme cela est représenté sur la figure 2, le système 22 de détection d'état de tension mécanique comporte un organe élastique 23 et un interrupteur 24 disposés entre une portion d'une boucle de sangle 25 bien visible sur la figure 3 et une portion de l'élément mâle 12. La boucle de sangle 25 passe à l'intérieur d'une ouverture 26 ménagée dans l'élément mâle 12 afin de solidariser la sangle 16 avec l'élément mâle 12. En variante, l'organe élastique 23 et l'interrupteur 24 sont disposés sur l'élément femelle 13. En intégrant le système 22 sur l'élément mâle 12 ou l'élément femelle 13 de la ceinture, on évite son implantation sur une sangle 15, 16 qui engendre un bourrelet inconfortable pour le passager.

Ainsi, lorsqu'une tension mécanique appliquée sur la sangle 16 dépasse un seuil, la boucle de sangle 25 déforme l'organe élastique 23 et enclenche l'interrupteur 24, ce qui indique que la ceinture est suffisamment serrée. L'organe élastique 23 est taré de façon à autoriser l'enclenchement de l'interrupteur 24 lorsque la tension mécanique appliquée sur la sangle 16 dépasse un seuil de tension mécanique compris entre 5 et 20 Newtons et valant par exemple de l'ordre de 10 Newtons. Par "de l'ordre de", on entend une variation de plus ou moins 10% autour de la valeur cible. L'interrupteur 24 est désactivé lorsque la tension mécanique appliquée sur la sangle 16 passe en dessous du seuil. Par "enclenchement" de l'interrupteur 24, on entend un passage de l'interrupteur 24 d'un état ouvert par défaut à un état fermé ou inversement un passage de l'état fermé par défaut à un état ouvert de l'interrupteur 24.

En variante ou en complément, le système 22 de détection d'état de tension mécanique comporte un capteur piézo-électrique ou une jauge de contrainte réagissant à une pression appliquée par une sangle de la ceinture de sécurité. Le capteur piézo-électrique ou la jauge pourra détecter la déformation de l'organe élastique 23.

Comme on peut le voir sur la figure 1, la ceinture de sécurité 10 pourra comporter une butée 27 disposée sur une partie d'une sangle 15, 16 réglable de façon à empêcher un serrage de la ceinture de sécurité 10 lorsque personne n'est installé sur le siège correspondant. Ainsi, la butée 27 évite l'enclenchement de l'interrupteur 24 si les sangles 15, 16 ne sont pas disposées autour du corps du passager, dans le cas notamment où la ceinture serait disposée derrière ou sous le passager. La butée 27 pourra prendre la forme d'un élément rapporté cousu sur une sangle 15, 16.

Alternativement, une sangle 15, 16 fixe a une longueur suffisante ne permettant pas d'effectuer un serrage de la ceinture de sécurité 10 lorsque personne n'est installé sur le siège correspondant. A cet effet, une longueur minimum d'une sangle 15, 16 est supérieure à la distance entre la boucle de fermeture 11 et les points d'ancrage de part et d'autre de l'assise.

Dans le mode de réalisation des figures 2 et 3, l'organe élastique 23 est constitué par une tige pliante 28. La boucle de sangle 25 vient donc plier la tige 28 lorsque la ceinture 10 est mise en tension.

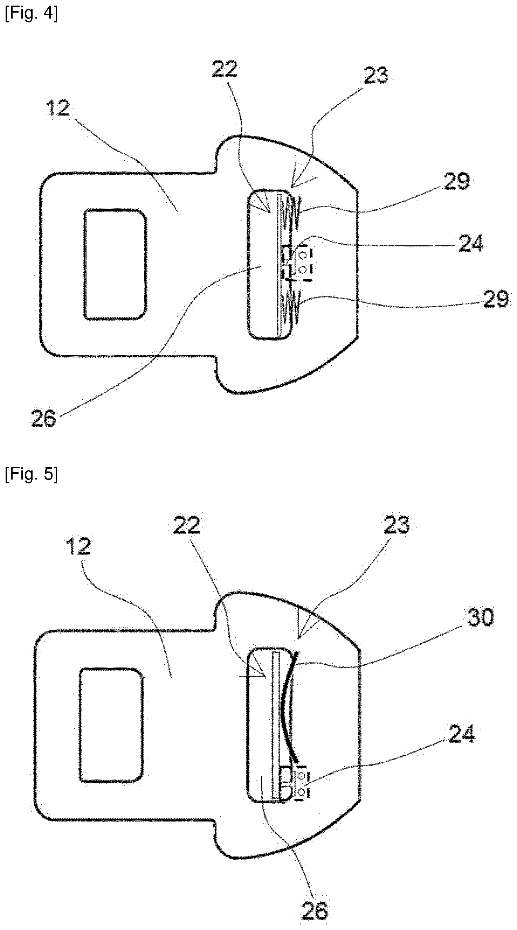

Dans le mode de réalisation de la figure 4, l'organe élastique 23 est constitué par au moins un ressort 29, par exemple de type hélicoïdal.

Dans le mode de réalisation de la figure 5, l'organe élastique 23 est constitué par au moins un ressort à lame 30.

Une unité de contrôle 31 est connectée au système 18 de détection d'état de fermeture de la ceinture de sécurité 10 et au système 22 de détection d'état de tension mécanique de la ceinture de sécurité 10.

L'unité de contrôle 31 est apte à commander un module de communication 32, notamment sans-fil, pour transmettre l'information relative à l'état de fermeture de la ceinture de sécurité 10 et/ou l'information relative à l'état de tension mécanique de la ceinture de sécurité 10. L'unité de contrôle 31 est apte à détecter quatre états de la ceinture à savoir les états "ouvert", "fermé", "tendu", et "détendu".

L'unité de contrôle 31 est configurée pour mettre sous tension le module de communication 32 après une détection d'un changement d'état de la ceinture de sécurité 10 et pour couper une alimentation du module de communication 32 après que ledit module de communication 32 a transmis le changement d'état de la ceinture de sécurité 10.

L'unité de contrôle 31 est configurée pour détecter un changement d'état de tension mécanique (passage de l'état "détendu" à l'état "tendu" ou inversement passage de l'état "tendu" à l'état "détendu") uniquement si l'interrupteur 24 change d'état pendant une durée supérieure à un seuil, par exemple de l'ordre de 10 secondes, et si la boucle de fermeture 11 est à l'état fermé.

De préférence, la ceinture 10 comporte une source d'énergie électrique 34, notamment une pile, pour être autonome électriquement. La pile 34 est par exemple une pile au Lithium. Comme cela est illustré sur la figure 2, un condensateur 33 est connecté électriquement en parallèle de la pile 34 de façon à provoquer une consommation de courant de la pile 34 pour éviter sa passivation liée à une longue période d'inactivité de la pile 34.

De préférence, l'unité de contrôle 31 intègre un compteur 37 d'un nombre d'activations du module de communication 32 pour évaluer un niveau d'énergie électrique restant de la pile 34. En effet, le module de communication 32 est l'organe le plus consommateur d'énergie du système. En conséquence, en connaissant l'énergie électrique disponible dans la pile 34 et en comptant le nombre d'activations du module de communication 32, il est possible d'en déduire le niveau d'énergie électrique restant de la pile 34.

De préférence, le capteur magnétique 20 du système 18 de détection d'état de fermeture de la ceinture de sécurité 10, et le système 22 de détection d'état de tension mécanique de la ceinture de sécurité 10 sont disposés sur un même élément mâle 12 ou femelle 13 de la ceinture de sécurité 10. Cela permet de faciliter les connexions électriques avec l'unité de contrôle 31.

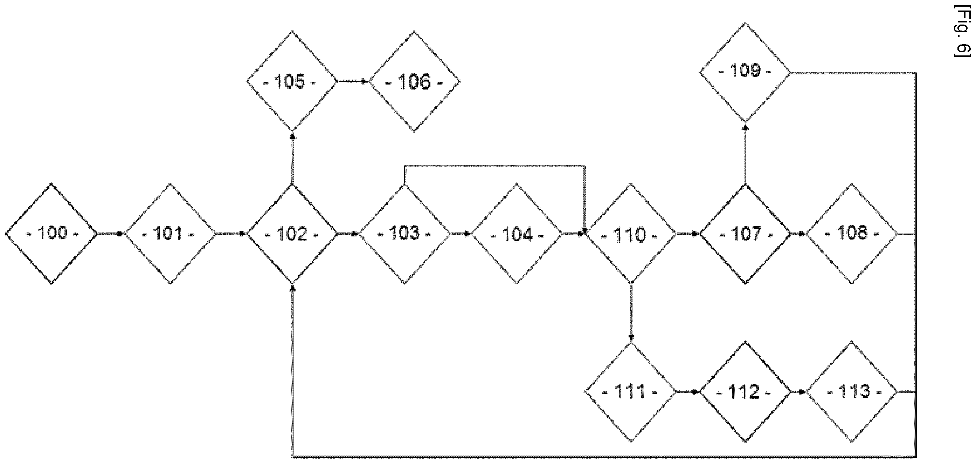

On décrit ci-après en référence avec la figure 6, les étapes de fonctionnement de la ceinture de sécurité 10 selon l'invention.

Lors d'un bouclage de la ceinture se produisant dans une étape 100, l'interrupteur magnétique 20 du bouclage se ferme ce qui fait basculer un relais statique qui permet d'alimenter l'unité de contrôle 31 en énergie via la pile (cf. étape 101). L'unité de contrôle 31 pilote également le relais de façon à pouvoir contrôler sa propre alimentation. Le relai statique est par exemple réalisé à base d'un transistor MOSFET.

Dans le cas où la ceinture est bien bouclée (cf. étape 102) et que son état est différent d'un état précédent (cf. étape 103), l'unité de contrôle 31 met sous tension le module de communication 32 via un relais statique analogue. L'unité de contrôle 31 transmet alors l'état "bouclé" au module de communication 32. Le module de communication 32 sans fil transmet, dans une étape 104, le statut bouclé à un module de communication 32 qui l'envoie à destination d'un système centralisé. Une fois l'envoi effectué, l'unité de contrôle 31 coupe l'alimentation du module de communication 32 afin d'économiser de l'énergie. Dans le cas contraire, le module de communication 32 transmet un état "non bouclé" dans une étape 105 et le système est désactivé dans une étape 106.

Si la ceinture est bouclée, l'unité de contrôle 31 calcule, dans une étape 107, une durée de fermeture de l'interrupteur 24 de la tension mécanique. Si cette durée est supérieure à une durée prédéterminée par exemple de l'ordre de 10 secondes, l'unité de contrôle 31 détecte alors un état "tendu" de la ceinture de sécurité 10. L'unité de contrôle 31 met sous tension le module de communication 32 et transmet audit module de communication 32 l'état "tendu" dans une étape 108. Le module de communication 32 sans fil transmet alors cet état au système centralisé. Une fois l'envoi effectué, l'unité de contrôle 31 coupe l'alimentation du module de communication 32.

L'unité de contrôle 31 calcule ensuite la durée d'ouverture de l'interrupteur 24 de la tension mécanique. Si cette durée est supérieure à une durée prédéfinie par exemple de l'ordre de 10 secondes, l'unité de contrôle 31 détecte alors l'état "détendu" de la ceinture dans une étape 109. L'unité de contrôle 31 met sous tension le module de communication 32, et transmet l'état détendu au module de communication 32. Le module de communication 32 sans fil le transmet à son tour au système centralisé. Une fois l'envoi effectué, l'unité de contrôle 31 coupe l'alimentation du module de communication 32.

Durant toute la période d'alimentation de l'unité de contrôle 31, à chaque transition d'étapes et pendant les étapes du calcul de la durée de fermeture ou d'ouverture de l'interrupteur 24 de la tension mécanique, l'unité de contrôle 31 vérifie si l'interrupteur magnétique de bouclage 20 est encore fermé. Si ce n'est plus le cas, c'est-à-dire si la boucle de fermeture 11 est ouverte, l'unité de contrôle 31 met sous tension le module de communication 32 et lui transmet l'état "débouclé". Le module de communication 32 sans fil transmet à son tour cet état au système centralisé. Une fois l'envoi effectué, l'unité de contrôle 31 coupe l'alimentation du module de communication 32. L'unité de contrôle 31 coupe ensuite sa propre alimentation et se remettra en fonctionnement lors d'un nouveau bouclage.

Il est à noter que l'activité de la ceinture est de préférence supervisée dans une étape 110. L'unité de contrôle 31 est configurée pour passer dans un mode veille dans une étape 111 après une période d'inactivité prédéterminée, par exemple de l'ordre de 2 secondes. On minimise ainsi la consommation électrique du système. Le système redevient actif dans une étape 112 dès que se produit un changement d'état lié au débouclage, serrage, ou desserrage de la ceinture dans une étape 113.

La description précédente a été effectuée pour une ceinture de sécurité 10 à deux points de fixation comportant deux sangles 15, 16 enserrant une portion du corps d'un passager au niveau de son bassin.

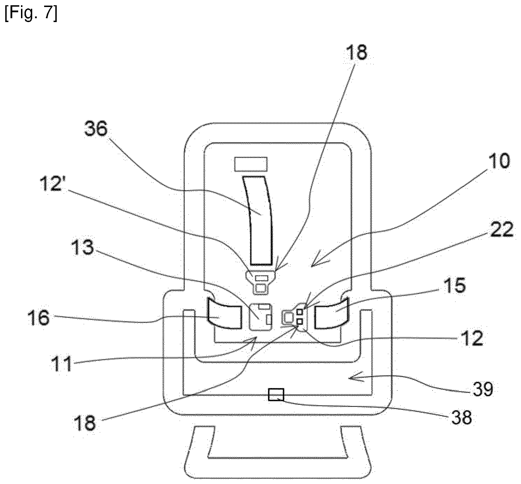

Dans le mode de réalisation de la figure 7, un siège muni d'une ceinture à trois points de fixation comporte en plus de la première sangle 15 et de la deuxième sangle 16, une troisième sangle 36 associée à un deuxième élément mâle 12' pour maintenir le passager au niveau d'une épaule. Dans ce cas, le premier élément mâle 12 comporte un système 18 de détection d'état de fermeture de la ceinture de sécurité, et un système 22 de détection d'état de tension mécanique de la ceinture de sécurité. Le deuxième élément mâle 12 pourra comporter uniquement un système 18 de détection d'état de fermeture de la ceinture de sécurité.

On pourra également prévoir un capteur 38 de détection d'une présence du passager sur le siège ou sur la boucle de ceinture. Ce capteur 38 est disposé à l'intérieur d'une assise 39 du siège ou sur la boucle de ceinture pour pouvoir déterminer si un passager est présent sur le siège. Quand présent sur la boucle de siège, ce capteur 38 pourra par exemple prendre la forme d'un accéléromètre, d'un capteur capacitif, ou de tout autre capteur adapté à l'application. Quand présent sur l'assise, ce capteur 38 pourra par exemple prendre la forme d'un accéléromètre, d'un capteur capacitif, d'un capteur piézo-électrique, d'une jauge de contrainte, ou de tout autre capteur adapté à l'application. Il sera ainsi possible, notamment au cours des phases de décollage et d'atterrissage de l'avion, d'émettre un signal à destination d'un membre d'équipage ou du passager dans le cas où la présence d'un passager sur son siège serait détectée mais que la ceinture de sécurité 10 ne serait pas correctement tendue. Cela pourrait signifier que le passager s'est assis par inadvertance sur la ceinture 10 et il faut donc l'alerter pour éviter tout risque pour sa sécurité.

L'invention a également pour objet un avion comportant un siège à deux ou trois points de fixation tel que précédemment défini.

## Revendications

1. Ceinture de sécurité (10), en particulier destinée à être installée sur un siège d'avion, comportant:
- une boucle de fermeture (11) comprenant un élément mâle (12) et un élément femelle (13),
- une première sangle (15) reliée à l'élément mâle (12) et une deuxième sangle (16) reliée à l'élément femelle (13),
- la première sangle (15) et la deuxième sangle (16) étant aptes à être attachées ensemble au moyen de la boucle de fermeture (11) pouvant passer d'un état ouvert à un état fermé par mise en coopération de l'élément mâle (12) et de l'élément femelle (13),
où ladite ceinture de sécurité (10) comporte en outre:
- un système (18) de détection d'état de fermeture de la ceinture de sécurité (10) apte à générer une information relative à un état de fermeture de la ceinture de sécurité (10), et
- un système (22) de détection d'état de tension mécanique de la ceinture de sécurité (10) apte à générer une information relative à un état de tension mécanique d'au moins une sangle de la ceinture de sécurité (10),
- le système (18) de détection d'état de fermeture comportant:
- un élément magnétique (19) disposé sur un des éléments parmi l'élément femelle (13) et l'élément mâle (12) de la boucle de fermeture (11), et
- un capteur de champ magnétique (20) placé sur l'autre des éléments parmi l'élément femelle (13) et l'élément mâle (12) de la boucle de fermeture,
- le capteur magnétique du système (18) de détection d'état de fermeture de la ceinture de sécurité (10), et le système (22) de détection d'état de tension mécanique de la ceinture de sécurité (10) étant disposés sur un même élément mâle ou femelle de la ceinture de sécurité (10),
- le système (22) de détection d'état de tension mécanique comportant un organe élastique (23) et un interrupteur (24) disposés entre une portion d'une boucle de sangle et une portion d'un élément mâle (12) ou un élément femelle (13), de telle façon que lorsqu'une tension mécanique appliquée sur une sangle (15, 16) dépasse un seuil, la sangle déforme l'organe élastique (23) et enclenche l'interrupteur (24) pour indiquer que la ceinture de sécurité (10) est suffisamment serrée autour d'une portion du corps d'un passager.

2. Ceinture de sécurité selon la revendication 1, **caractérisée en ce que** le capteur de champ magnétique (20) est un interrupteur (24) magnétique apte à se fermer du fait de la proximité de l'élément magnétique (19) lorsque la boucle de fermeture (11) est fermée.

3. Ceinture de sécurité selon la revendication1 ou 2, **caractérisée en ce que** l'organe élastique (23) est constitué par une tige pliante (28).

4. Ceinture de sécurité selon l'une quelconque des revendications 1 à 3, **caractérisée en ce que** l'organe élastique (23) est constitué par au moins un ressort (29).

5. Ceinture de sécurité selon l'une quelconque des revendications 1 à 4, **caractérisée en ce que** l'organe élastique (23) est un ressort à lame (30).

6. Ceinture de sécurité selon l'une quelconque des revendications 1 à 5, **caractérisée en ce qu'**elle comporte une unité de contrôle (31) connectée au système (18) de détection d'état de fermeture de la ceinture de sécurité (10) et au système (22) de détection d'un niveau de tension mécanique de la ceinture de sécurité (10).

7. Ceinture de sécurité selon la revendication 6, **caractérisée en ce que** ladite unité de contrôle (31) est apte à commander un module de communication (32), notamment sans-fil, pour transmettre l'information relative à l'état de fermeture de la ceinture de sécurité (10) et/ou l'information relative à l'état de tension mécanique de la ceinture de sécurité (10).

8. Ceinture de sécurité selon la revendication 7, **caractérisée en ce que** l'unité de contrôle (31) est configurée pour mettre sous tension le module de communication (32) après une détection d'un changement d'état de la ceinture de sécurité et pour couper une alimentation du module de communication (32) après que ledit module de communication (32) a transmis le changement d'état de la ceinture de sécurité (10).

9. Ceinture de sécurité selon les revendications 1 et 6, **caractérisée en ce que** l'unité de contrôle (31) est configurée pour détecter un changement d'état de tension mécanique uniquement si l'interrupteur (24) change d'état pendant une durée supérieure à un seuil et si la boucle de fermeture (11) est à l'état fermé.

10. Ceinture de sécurité selon l'une quelconque des revendications 6 à 9, **caractérisée en ce que** l'unité de contrôle (31) est configurée pour passer dans un mode veille après une période d'inactivité prédéterminée.

11. Ceinture de sécurité selon l'une quelconque des revendications 1 à 10, **caractérisée en ce qu'**elle comporte une source d'énergie électrique (34), notamment une pile, pour être autonome électriquement.

12. Ceinture de sécurité selon la revendication 11, **caractérisée en ce qu'**un condensateur (33) est connecté électriquement en parallèle de la source d'énergie électrique (34) de façon à provoquer une consommation de courant de la source d'énergie électrique pour éviter sa passivation liée à une longue période d'inactivité de la source d'énergie électrique (34).

13. Ceinture de sécurité selon les revendications 7 et 11, **caractérisée en ce que** l'unité de contrôle (31) intègre un compteur (37) d'un nombre d'activations du module de communication (32) pour évaluer un niveau d'énergie électrique restant de la source d'énergie électrique (34).

14. Ceinture de sécurité selon l'une quelconque des revendications 1 à 13, **caractérisée en ce qu'**elle comporte une butée (27) disposée sur une partie d'une sangle (15, 16) réglable de façon à empêcher un serrage de la ceinture de sécurité lorsque personne n'est installé sur le siège correspondant.

15. Ceinture de sécurité selon l'une quelconque des revendications 1 à 13, **caractérisée en ce qu'**une sangle (15, 16) fixe a une longueur suffisante ne permettant pas d'effectuer un serrage de la ceinture de sécurité lorsque personne n'est installé sur le siège correspondant.

16. Siège comportant une ceinture de sécurité (10) telle que définie selon l'une quelconque des revendications précédentes.

17. Avion comportant un siège tel que défini selon la revendication précédente.

## Patentansprüche

1. Sicherheitsgurt (10), insbesondere für einen Flugzeugsitz, mit:
- einer Verschlussschnalle (11), die ein männliches Element (12) und ein weibliches Element (13) umfasst,
- einem ersten Riemen (15), der mit dem männlichen Element (12) verbunden ist, und einem zweiten Riemen (16), der mit dem weiblichen Element (13) verbunden ist,
- wobei der erste Riemen (15) und der zweite Riemen (16) mittels der Verschlussschnalle (11) miteinander verbunden werden können, die durch Zusammenwirken des männlichen Elements (12) und des weiblichen Elements (13) von einem offenen Zustand in einen geschlossenen Zustand übergehen kann,
wobei
der Sicherheitsgurt (10) weiterhin aufweist:
- ein System (18) zum Erfassen des Schließzustands des Sicherheitsgurtes (10) und zum Erzeugen einer Information über einen Schließzustand des Sicherheitsgurtes (10), und
- ein System (22) zum Erfassen des mechanischen Spannungszustands des Sicherheitsgurtes (10) und zum Erzeugen einer Information über einen mechanischen Spannungszustand zumindest eines Gurtriemens des Sicherheitsgurtes (10),
- wobei das System (18) zum Erkennen des Schließzustands umfasst:
- ein magnetisches Element (19), das an einem des weiblichen Elements (13) und des männlichen Elements (12) der Verschlussschnalle (11) angeordnet ist, und
- einen Magnetfeldsensor (20), der am anderen des weiblichen Elements (13) und des männlichen Elements (12) der Verschlussschnalle angeordnet ist,
- wobei der Magnetsensor des Systems (18) zur Erfassung des Schließzustands des Sicherheitsgurts (10) und das System (22) zur Erfassung des mechanischen Spannungszustands des Sicherheitsgurts (10) am gleichen männlichen oder weiblichen Element des Sicherheitsgurts (10) angeordnet sind,
- wobei das System (22) zum Erfassen des mechanischen Spannungszustands ein elastisches Mittel (23) und einen Schalter (24) umfasst, die zwischen einem Abschnitt einer Riemenschnalle und einem Abschnitt eines männlichen Elements (12) oder weiblichen Elements (13) angeordnet ist, so dass, bei Überschreitung eines Schwellenwerts durch eine auf einen Riemen (15, 16) ausgeübte mechanische Spannung der Riemen das elastische Mittel (23) verformt und den Schalter (24) auslöst, um anzuzeigen, dass der Sicherheitsgurt (10) ausreichend um einen Abschnitt des Körpers eines Passagiers gespannt ist.

2. Sicherheitsgurt nach Anspruch 1, **dadurch gekennzeichnet, dass** der Magnetfeldsensor (20) ein Magnetschalter (24) ist, der sich bei geschlossenem Verschlussschnalle (11) aufgrund der Nähe des Magnetelements (19) schließen kann.

3. Sicherheitsgurt nach Anspruch 1 oder 2, **dadurch gekennzeichnet, dass** das elastische Mittel (23) aus einem Faltstift (28) besteht.

4. Sicherheitsgurt nach einem der Ansprüche 1 bis 3, **dadurch gekennzeichnet, dass** das elastische Mittel (23) aus mindestens einer Feder (29) besteht.

5. Sicherheitsgurt nach einem der Ansprüche 1 bis 4, **dadurch gekennzeichnet, dass** das elastische Mittel (23) eine Blattfeder (30) ist.

6. Sicherheitsgurt nach einem der Ansprüche 1 bis 5, **dadurch gekennzeichnet, dass** er eine Steuereinheit (31) umfasst, die mit dem System (18) zum Erfassen des Schließzustands des Sicherheitsgurts (10) und mit dem System (22) zum Erfassen eines mechanischen Spannungspegels des Sicherheitsgurts (10) verbunden ist.

7. Sicherheitsgurt nach Anspruch 6, **dadurch gekennzeichnet, dass** die Steuereinheit (31) ein, insbesondere drahtloses, Kommunikationsmodul (32) ansteuern kann, um die Information über den Schließzustand des Sicherheitsgurtes (10) und/oder die Information über den mechanischen Spannungszustand des Sicherheitsgurtes (10) zu übertragen.

8. Sicherheitsgurt nach Anspruch 7, **dadurch gekennzeichnet, dass** die Steuereinheit (31) dazu ausgebildet ist, nach Erkennen einer Zustandsänderung des Sicherheitsgurtes die Stromversorgung des Kommunikationsmoduls (32) zu aktivieren und nach Übermittlung der Zustandsänderung des Sicherheitsgurtes (10) durch das Kommunikationsmodul (32) eine Stromversorgung des Kommunikationsmoduls (32) zu deaktivieren.

9. Sicherheitsgurt nach Ansprüchen 1 und 6, **dadurch gekennzeichnet, dass** die Steuereinheit (31) dazu ausgebildet ist, eine Änderung des mechanischen Spannungszustands nur dann zu erfassen, wenn der Schalter (24) seinen Zustand für eine einen Schwellenwert überschreitende Dauer ändert, und wenn sich die Schließschnalle (11) im geschlossenen Zustand befindet.

10. Sicherheitsgurt nach einem der Ansprüche 6 bis 9, **dadurch gekennzeichnet, dass** die Steuereinheit (31) dazu ausgebildet ist, nach einer vorgegebenen Inaktivitätszeit in einen Standby-Modus zu wechseln.

11. Sicherheitsgurt nach einem der Ansprüche 1 bis 10, **dadurch gekennzeichnet, dass** er eine elektrische Energiequelle (34), insbesondere eine Batterie, umfasst, sodass er elektrisch autonom ist.

12. Sicherheitsgurt nach Anspruch 11, **dadurch gekennzeichnet, dass** ein Kondensator (33) elektrisch parallel zur elektrischen Energiequelle (34) geschaltet ist, um einen Stromverbrauch der elektrischen Energiequelle zu bewirken, um deren Passivierung aufgrund einer langen Inaktivitätsperiode der elektrischen Energiequelle (34) zu vermeiden.

13. Sicherheitsgurt nach Anspruch 7 und 11, **dadurch gekennzeichnet, dass** die Steuereinheit (31) einen Zähler (37) für eine Anzahl von Aktivierungen des Kommunikationsmoduls (32) integriert, um einen verbleibenden elektrischen Energiepegel der elektrischen Energiequelle (34) auszuwerten.

14. Sicherheitsgurt nach einem der Ansprüche 1 bis 13, **dadurch gekennzeichnet, dass** er einen Anschlag (27) umfasst, der an einem Teil eines verstellbaren Riemens (15, 16) angeordnet ist, sodass er bei keiner Person im entsprechenden Sitz die Spannung des Sicherheitsgurts verhindert.

15. Sicherheitsgurt nach einem der Ansprüche 1 bis 13, **dadurch gekennzeichnet, dass** ein fester Riemen (15, 16) eine derart ausreichende Länge aufweist, dass bei keiner Person im entsprechenden Sitz keine Spannung des Sicherheitsgurts durchgeführt werden kann.

16. Sitz mit einem Sicherheitsgurt (10) gemäß einem der vorhergehenden Ansprüche.

17. Flugzeug mit einem Sitz gemäß dem vorhergehenden Anspruch.

## Claims

1. A safety belt (10), in particular for an aircraft seat, comprising:
- a closing buckle (11) comprising a male element (12) and a female element (13),
- a first strap (15) connected to the male element (12) and a second strap (16) connected to the female element (13),
- the first strap (15) and the second strap (16) being able to be attached together by means of the closing buckle (11) which can pass from an open state to a closed state by bringing the male element (12) and the female element (13) into cooperation with one another,
wherein
said safety belt (10) further comprises:
- a system (18) for detecting the closing state of the seat belt (10) and for generating information relating to a closing state of the seat belt (10), and
- a system (22) for detecting the state of mechanical tension of the seat belt (10) and for generating information relating to a state of mechanical tension of at least one strap of the seat belt (10),
- the system (18) for detecting the closing state comprising:
- a magnetic element (19) arranged on one of the female element (13) and the male element (12) of the closing buckle (11), and
- a magnetic field sensor (20) arranged on the other of the female element (13) and the male element (12) of the closing buckle,
- the magnetic sensor of the system (18) for detecting the closing state of the seat belt (10), and the system (22) for detecting the state of mechanical tension of the seat belt (10) being arranged on the same male or female element of the seat belt (10),
- the system (22) for detecting the mechanical tension state comprising an elastic member (23) and a switch (24) arranged between a portion of a strap buckle and a portion of a male element (12) or female element (13), such that when a mechanical tension applied to a strap (15, 16) exceeds a threshold the strap deforms the elastic member (23) and triggers the switch (24) to indicate that the seat belt (10) is sufficiently tight around a portion of a passenger's body.

2. The safety belt according to claim 1, **characterized in that** the magnetic field sensor (20) is a magnetic switch (24) capable of closing due to the proximity of the magnetic element (19) when the closing buckle (11) is closed.

3. The safety belt according to claim 1 or 2, **characterized in that** the elastic member (23) is formed by a folding rod (28).

4. The safety belt according to any of the claims 1 to 3, **characterized in that** the elastic member (23) is formed by at least one spring (29).

5. The safety belt according to any of the claims 1 to 4, **characterized in that** the elastic member (23) is a leaf spring (30).

6. The safety belt according to any of the claims 1 to 5, **characterized in that** it comprises a control unit (31) connected to the system (18) for detecting the closing state of the safety belt (10) and to the system (22) for detecting a level of mechanical tension of the safety belt (10).

7. The safety belt according to claim 6, **characterized in that** said control unit (31) is capable of controlling a communication module (32), in particular a wireless one, to transmit information about the closing state of the safety belt (10) and/or information about the state of mechanical tension of the safety belt (10).

8. The safety belt according to claim 7, **characterized in that** the control unit (31) is configured to activate the power supply for the communication module (32) after detecting a change in state of the safety belt and to deactivate a power supply for the communication module (32) after said communication module (32) has transmitted the change in state of the safety belt (10).

9. The safety belt according to claims 1 and 6, **characterized in that** the control unit (31) is configured to detect a change in mechanical tension state only if the switch (24) changes its state for a duration superior a threshold and if the closing buckle (11) is in the closed state.

10. The safety belt according to any of the claims 6 to 9, **characterized in that** the control unit (31) is configured to switch to a standby mode after a predetermined period of inactivity.

11. The safety belt according to any of the claims 1 to 10, **characterized in that** it comprises a source of electrical energy (34), in particular a battery, so as to be electrically autonomous.

12. The safety belt according to claim 11, **characterized in that** a capacitor (33) is electrically connected in parallel with the electrical energy source (34) so as to cause a current consumption of the electrical energy source in order to avoid its passivation linked to a long period of inactivity of the electrical energy source (34).

13. The safety belt according to claims 7 and 11, **characterized in that** the control unit (31) integrates a counter (37) for a number of activations of the communication module (32) in order to evaluate a remaining level of electrical energy of the electrical energy source (34).

14. The safety belt according to any of the claims 1 to 13, **characterized in that** it comprises a stop (27) arranged on a part of an adjustable strap (15, 16) so as to prevent the safety belt from tightening when nobody is seated in the corresponding seat.

15. The safety belt according to any of the claims 1 to 13, **characterized in that** a fixed strap (15, 16) has such a sufficient length that the seat belt cannot be tightened when nobody is seated in the corresponding seat.

16. A seat comprising a safety belt (10) as defined according to any of the preceding claims.

17. An aircraft comprising a seat as defined according to the preceding claim.
